# FASCICULE DE BREVET EUROPEEN

(11) **EP 0 640 230 B1**
(45) Date de publication et mention de la délivrance du brevet: **24.07.1996**
(21) Numéro de dépôt: 93910102.8
(22) Date de dépôt: 10.05.1993
(51) Int. Cl.: G06F 17/30

(54) **PROCEDE DE CONSULTATION ET DE MISE A JOUR DE DONNEES SPECIALISEES ET SYSTEME DE MISE EN OEUVRE DE CE PROCEDE**
ABFRAGE- UND AKTUELISIERUNGSVERFAHREN FÜR SPEZIELLE DATEN UND SYSTEM, UM DIESES VERFAHREN EINZUSETZEN.
PROCESS FOR THE CONSULTATION AND UPDATING OF SPECIALIZED DATA AND SYSTEM FOR PUTTING INTO EFFECT SAID PROCESS

(30) Priorité: 11.05.1992 FR 9205688
(43) Date de publication de la demande: 01.03.1995
(73) Titulaire: BOISSEAU, Dominique, F- 83320 Carqueiranne (FR); CAUVIN, Daniel, F-91160 Longjumeau (FR); RAFFAELLI, Michel, 83390 Pierrefeu (FR); GALAN, Robert, 71260 Azé (FR)
(72) Inventeur: BOISSEAU, Dominique, F- 83320 Carqueiranne (FR); CAUVIN, Daniel, F-91160 Longjumeau (FR); RAFFAELLI, Michel, 83390 Pierrefeu (FR); GALAN, Robert, 71260 Azé (FR)
(74) Mandataire: Roman, Michel
(86) Numéro de dépôt international: FR9300449
(87) Numéro de publication internationale: WO9323819

(56) Documents cités:
- EP-A- 0 063 080
- WO-A-91/00574
- GB-A- 2 203 571

## Description

### Domaine technique

L'invention concerne un procédé de consultation et de mise à jour de données spécialisées, et un système de mise en oeuvre de ce procédé.

L'invention trouve une application particulièrement avantageuse dans la consultation et la mise à jour de la documentation technique et réglementaire destinée au personnel navigant dans une compagnie aérienne.

### Etude de la technique antérieure

Dans de nombreuses professions il est nécessaire au spécialiste de disposer chez lui (domicile ou bureau) d'une documentation professionnelle qui a la particularité d'être modifiée sans cesse. Ainsi dans le cas de la documentation technique et réglementaire destinée au personnel navigant, ces changements sont dus notamment à la rapide évolution technologique dans le domaine aéronautique.

Dans ce domaine, qui sera considéré à titre d'exemple dans la suite de la description, la documentation mise à disposition du personnel navigant est d'ordre technique ou réglementaire. Elle représente environ 10 000 pages réparties en moyenne en une dizaine de volumes.

Du fait de l'évolution des systèmes, des règlements et des procédures d'utilisation, chaque année les mises à jour renouvellent 50 % de cette documentation. Les mises à jour sont faites par le personnel navigant dès réception. Le volume et les fréquences de ces mises à jour sont totalement aléatoires.

A cause des particularités de chaque compagnie concernant les standards avions et les procédures d'utilisation, cette documentation nécessite des moyens importants de composition, d'impression, de stockage et de distribution.

Avec l'arrivée des avions de la prochaine génération (Airbus A340, Boeing 777) les constructeurs vont proposer une documentation "technique avion" numérisée. Celle-ci sera archivée dans une bibliothèque électronique de bord. Elle pourra être complétée et bénéficier d'une présentation particularisée par chaque compagnie. Chaque compagnie utilisera des moyens PAO pour éditer la documentation papier qu'elle continuera à dispenser à tout personnel navigant.

Un document de l'art connu, la demande de brevet GB-A-2 203 571, décrit un système de mise à jour de banque de données comprenant plusieurs calculateurs à distance avec leurs banques de données correspondantes et leurs modems de communications correspondants et un centre de gestion centralisé servant à communiquer des messages à des boîtes aux lettres électroniques de ces différents calculateurs à distance. Les messages contiennent des modifications pour les différentes banques de données, chaque calculateur à distance étant agencé pour retrouver chacun de ces messages à partir de sa boîte aux lettres électronique et pour modifier automatiquement sa banque de données en fonction de ces messages. Ainsi des utilisateurs éloignés, possédant leur propre calculaeur, comprenant par exemple un micro-ordinateur avec un moniteur et un clavier, peuvent accéder à une banque de données centrale au travers de ce calculateur.

Le demande de brevet GB-A-2 203 571 concerne des personnels délocalisés munis d'un ordinateur relié à un site central par une liaison fixe. Alors que l'invention concerne des personnels délocalisés et itinérants munis d'un terminal portable relié à un serveur par liaison téléphonique.

Dans GB-A-2 203 571, chaque ordinateur va chercher la mise à jour de sa banque de données dans sa boîte aux lettres à l'initiative de l'utilisateur (ou à heure programmée).

Dans l'invention, l'utilisateur appelle le serveur pour avoir accès à un service, et c'est le serveur qui en profite pour alimenter le portable en mises à jour, de manière automatique, sans intervention de l'opérateur.

Dans GB-A-2 203 571, l'ordinateur est muni d'un programme qui renseigne le serveur sur l'utilisation de la base de données personnelle, à des fins statistiques. Dans l'invention, c'est le serveur qui suit la fréquence des mises à jour de la documentation du personnel. Il y a donc un contrôle réel de l'état de la documentation, et non de son utilisation.

Dans GB-A-2 203 571, le système, contrairement à celui de l'invention, ne sait pas faire des connexions automatiques, puisqu'il est réputé être connecté en permanence.

Enfin les structures matérielles liées au procédé de l'invention centrées sur un serveur permettent des liaisons interactives ouvrant sur de nombreuses applications, comme la formation permanente.

### Exposé de l'invention

La présente invention a pour objet la mise à jour automatique de ces données spécialisées.

Elle propose donc un procédé de mise à jour de données spécialisées évolutives dans des terminaux portables comprenant chacun une unité centrale de calcul reliée à une mémoire interne, à un écran, à un modem, et à un disque dur muni d'un logiciel, ces portables, à la disposition de personnes déterminées, étant reliés à un serveur télématique spécialisé par l'intermédiaire d'un réseau téléphonique commuté, **caractérisé en ce** qu'une mise à jour de ces données est effectuée automatiquement, page électronique par page électronique, dès que la connexion terminal portable/serveur est établie, de manière à ce que le serveur puisse contrôler avec certitude que l'ensemble des personnes déterminées ou utilisateurs, a bien reçu l'ensemble des mises à jour.

Avantageusement le serveur a également le moyen de modifier par le même procédé de mise à jour automatique tout programme contenu dans le disque dur du moyen de traitement de l'utilisateur, tant pour son fonctionnement en local que pour son utilisation avec le serveur.

Avantageusement le procédé de l'invention comprend, du côté de la personne qui utilise les moyens de traitement, les étapes suivantes :
- soit une étape de gestion bibliothèque, les moyens de traitement fonctionnant en local ;
- soit, si la personne concernée choisit de se connecter au serveur :
   - une étape de création de message comportant la saisie d'un code d'entrée et le choix éventuel d'un service, d'envoi de message à destination dudit serveur et de connexion automatique à ce serveur, suivie
   - d'une étape de réception des mises à jour ou des messages stockés dans une zone mémoire liée au numéro des moyens de traitement, en parallèle, lorsqu'un service a été sélectionné par ladite personne, avec
   - une étape de connexion au service demandé.

Avantageusement le procédé de l'invention comprend, du côté du serveur, les étapes suivantes :
- une étape de connexion aux moyens de traitement utilisés par la personne concernée ;
- une étape de recherche de mise à jour ou de messages dans la zone à mémoire liée au numéro des moyens de traitement et d'envoi de ces données par lots, après envoi d'un message signalant le début de chargement, avec en parallèle, lorsqu'un service a été sélectionné :
- une étape de connexion au service éventuel demandé ; et, en fin de transmission,
- une étape de déconnexion.

Avantageusement un tel procédé est utilisé pour la consultation et la mise à jour de la documentation technique et réglementaire destinée au personnel délocalisé d'une entreprise comme le personnel navigant dans une compagnie aérienne.

Le procédé de l'invention présente de très nombreux avantages.
- D'une part en ce qui concerne l'utilisateur, par exemple le personnel navigant :
   - l'utilisateur n'a plus la nécessité de stocker une dizaine de volumes chez lui ;
   - l'utilisateur n'a plus à récupérer les mises à jour papier, ni à les transporter chez lui, ni à effectuer chaque semaine des mises à jour fastidieuses ;
   - la documentation est disponible à tout moment et est toujours à jour ;
   - l'utilisateur peut utiliser les mêmes moyens pour recevoir cette documentation et pour avoir accès à différents services par exemple pour consulter son planning ;
   - l'utilisateur bénéficie de grandes facilités d'accès à l'information et d'aides à la recherche.
- D'autre part en ce qui concerne une compagnie aérienne vis-à-vis de son personnel navigant :
   - la compagnie est sûre que toutes les modifications ont été bien effectuées et peut présenter cela au contrôle de l'état ;
   - il n'y a plus d'impression, ni de stockage, ni de distribution dans les casiers ou boîtes aux lettres des personnels navigants : d'où une économie de personnel, de place et de transport ;
   - la compagnie peut proposer de nombreux services à son personnel navigant ;
   - elle peut délivrer tout message personnalisé à son personnel navigant ;
   - le temps de mise à jour est fortement diminué lorsqu'une modification de la documentation est décidée ;
   - les erreurs de manipulation lors des mises à jour et lors de la distribution sont supprimées ;
   - on peut utiliser le procédé de l'invention pour d'autres applications, comme par exemple la formation permanente. Avantageusement le procédé de l'invention peut avoir bien d'autres applications telles que la documentation de cabinets juridiques, ou celle des experts comptables, le suivi des patients, la téléassistance médicale, etc...

L'invention concerne également un système de mise en oeuvre du procédé, caractérisé en ce qu'il comprend :
- des moyens de traitement, dont le disque dur contient des programmes permettant l'utilisation du procédé, associés à des moyens de transmission sur le réseau téléphonique commuté mis à la disposition de chaque personne concernée ;
- une unité de traitement centralisée associée à des moyens de transmission sur ledit réseau, ayant accès à des moyens de stockage desdites données spécialisées.

Avantageusement le système de l'invention comprend un ordinateur portable ou un micro-ordinateur, contenant les moyens de traitement et les moyens de transmission, à la disposition de chaque personne concernée. Chaque ordinateur portable, ou micro-ordinateur comprend une unité centrale de calcul, reliée à une mémoire interne, à un écran, à un modem et à un disque dur contenant les programmes nécessaires à l'utilisation du procédé ; une imprimante peut être connectée à cet ordinateur portable ou à ce micro-ordinateur.

La nouveauté que présente ce micro-ordinateur ou ce portable réside dans le fait que son disque dur contient des programmes permettant de rendre très facile et conviviale l'utilisation des moyens de traitement destinés a un large public délocalisé et itinérant.
a) Dès la mise en marche du micro-ordinateur ou du portable, un programme permet de présenter directement le menu principal.
b) Un sous-programme permet la connexion automatique au serveur dès que l'utilisateur demande un service, avec envoi automatique d'un message formaté identifiant le micro-ordinateur ou le portable.
c) Un sous-programme effectue un test de capacité mémoire et un test de validité des dates dès réception du message serveur indiquant la présence de mise à jour et le volume de celle-ci, et interdit la déconnexion du serveur tant que l'ensemble de la mise à jour n'a pas été transféré du serveur au micro-ordinateur ou au portable, et valide l'ordre de déconnexion serveur si aucun service n'est utilisé.
D) Un sous-programme permet le remplacement, à partir de la mémoire tampon, des "pages électroniques" page par page.

L'unité de traitement centralisée forme un serveur télématique spécialisé qui comprend une unité centrale de calcul reliée à un scanner, à une mémoire, à un disque dur et à un modem.

L'invention concerne aussi un terminal portable comprenant une unité centrale de calcul reliée à une mémoire interne, un écran à un modem, et à un disque dur muni d'un logiciel, caractérisé en ce qu'il comprend :
- des moyens aptes à recevoir des données émises par un serveur télématique spécialisé au travers d'un réseau téléphonique commuté, et notamment une mise à jour automatique de ces données lors de l'établissement de la connexion avec ce serveur ;
   de manière à ce que le serveur puisse contrôler avec certitude que l'utilisateur de ce terminal a bien reçu l'ensemble des mises à jour qui lui sont destinées;
- des moyens aptes à émettre des messages vers ce serveur.

L'invention concerne enfin un serveur télématique spécialisé comprenant une unité centrale de calcul reliée à un scanner, à une mémoire, à un disque dur et à un modem, caractérisé en ce qu'il comprend :
- des moyens aptes à émettre des données vers plusieurs terminaux portables et notamment les données de mise à jour ou de messages mémorisées dans les boîtes aux lettres correspondant au numéro de chaque portable lors de la connexion avec celui-ci ;
   de manière à ce que le serveur puisse contrôler avec certitude que l'ensemble des utilisateurs de terminaux a bien reçu l'ensemble des mises à jour correspondantes;
- des moyens aptes à recevoir des messages de chaque terminal portable

### Brève description des dessins

- La figure 1 est une représentation schématique du système de mise en oeuvre du procédé selon l'invention ;
- les figures 2 et 3 sont deux parties d'un diagramme fonctionnel représentant les étapes du procédé selon l'invention.

### Exposé détaillé de modes de réalisation

Dans la suite de la description, pour simplifier l'explication, on prendra l'exemple d'un procédé de consultation et de mise à jour de données spécialisées destinées au personnel navigant dans une compagnie aérienne. Mais un tel procédé est bien évidemment applicable dans d'autres domaines d'activité.

Dans le domaine aéronautique le personnel navigant consulte régulièrement sa documentation. Il doit souvent la mettre à jour. De plus, il se déplace très frequemment. Pour tenir compte de ces données, le procédé de l'invention consiste à doter chaque personnel navigant d'un micro-ordinateur ou d'un ordinateur portable muni d'un disque dur de capacité suffisante pour garder en mémoire l'ensemble de la documentation que la compagnie doit lui fournir. Le micro-ordinateur ou ordinateur portable est relié à une imprimante afin de permettre une sortie papier de certains documents, suivant les besoins. Il est muni d'un logiciel permettant l'apparition d'un menu dès la mise sous-tension, ainsi que la connexion automatique dès la demande de service par l'utilisateur.

Le procédé de l'invention permet la consultation, sur ce micro-ordinateur ou ordinateur portable, et la mise à jour automatique par liaison RTC (Réseau Téléphonique Commuté) de bibliothèques informatiques personnelles à usage professionnel.

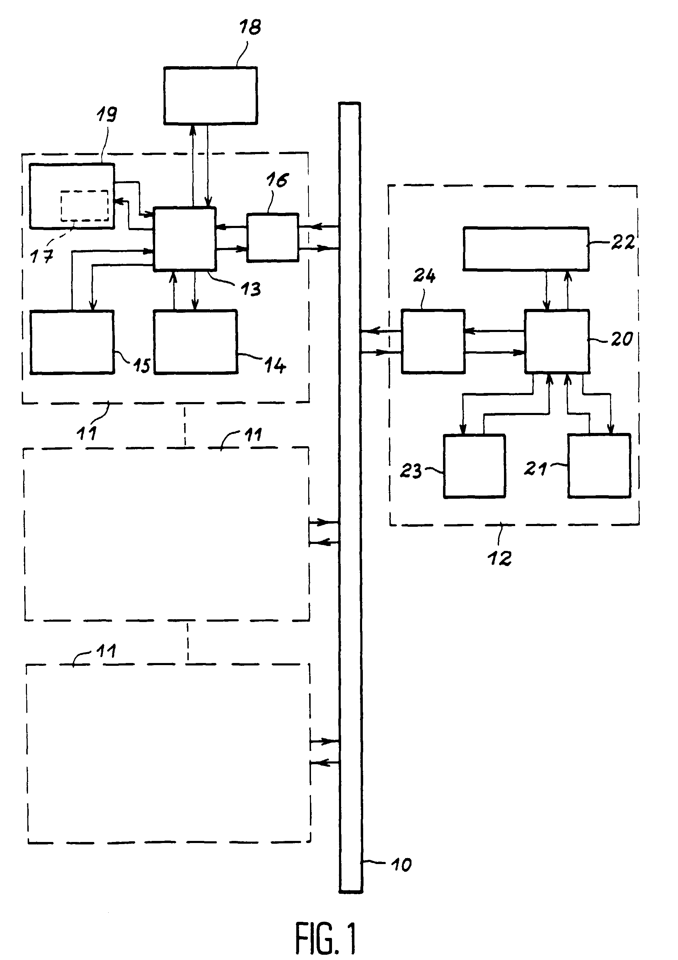

Comme représenté schématiquement sur la figure 1, le système de l'invention comporte donc les éléments suivants :
- une Ligne 10 schématisant le réseau téléphonique commuté, à laquelle sont reliés :
- d'une part plusieurs ordinateurs portables 11 ou micro-ordinateurs à la disposition de chaque utilisateur ;
- d'autre part un serveur télématique spécialisé 12.

Dans la suite de la description, pour des raisons de simplification de langage, on emploiera le terme de "portable" pour désigner ces ordinateurs portables ou ces micro-ordinateurs.

Chaque portable 11 comprend notamment une unité centrale de calcul 13, reliée à une mémoire interne 14, à un écran 15, à un modem 16 et à un disque dur 19 muni d'un logiciel 17. De plus une imprimante 18 peut être connectée à ce portable 11.

Le serveur télématique spécialisé 12 comprend, notamment, une unité centrale de calcul 20, reliée à un scanner 21, à une mémoire 22, à un disque dur 23 et à un modem 24.

L'utilisateur possède donc un portable 11. La documentation professionnelle nécessaire à l'exercice de la profession est stockée sur le disque dur 19. L'invention permet de mettre à jour cette documentation automatiquement par simple connexion du portable 11 au serveur 12.

Le procédé de l'invention comporte, du côté portable I, après la mise en route de celui-ci :
- soit une étape 30 de gestion bibliothèque, le portable fonctionnant en local ;
- soit, si l'utilisateur choisit de se connecter au serveur, une étape 50 de création de message comportant la saisie du code d'entrée ou avantageusement du matricule du personnel navigant, le choix du code serveur parmi une liste de codes proposés et le choix éventuel d'un service, d'envoi de message à destination dudit serveur et de connexion automatique à ce serveur, suivie d'une étape 51 de réception des mises à jour ou des messages stockés dans une zone mémoire liée au numéro du portable, que l'on désignera sous le terme de "boîte aux lettres" dans la suite de la description, en parallèle, lorsqu'un service a été sélectionné, avec une étape 52 de connexion au service demandé et enfin une étape d'affichage 53.

Le procédé de l'invention comporte, du côté serveur II, une étape 54 de connexion au portable, une étape 55 de recherche de mises à jour ou de messages dans la boîte aux lettres correspondant au numéro du portable et d'envoi de ces données par lots, après envoi d'un message signalant le début de chargement, avec en parallèle, lorsqu'un service a été sélectionné, une étape 56 de connexion au service éventuel demandé et, en fin de transmission, une étape 57 de déconnexion.

Dès sa mise en marche, le portable 11 propose dans la première page écran "menu" la possibilité de se connecter au serveur. Si l'utilisateur ne désire pas le faire, commence l'étape de gestion bibliothèque : il utilise alors le portable en local. Le procédé de l'invention permet alors l'accès à la documentation par volume, chapitre ou mot.

A chaque mise en marche le portable 11 effectue un test de capacité mémoire 14 et un test de validité des dates. Ces tests permettent la suppression automatique de notes de service qui ne sont pas à archiver ou qui ont atteint leur date limite. Ils permettent également l'affichage d'un message sur l'écran du portable et l'envoi d'un message d'alerte au serveur en cas de saturation de la mémoire 14 du portable 11.

On peut, à présent, préciser quelles sont les phases de cette étape 30 de gestion bibliothèque.

Après la mise en marche 31, le test 32 de connexion au serveur permet en cas de réponse négative un branchement à cette étape 30. Cette étape 30 comprend une phase de saisie par volume 33, une phase 34 de saisie par chapitre ou par mot, un test 35 de recherche par chapitre suivi en cas de réponse négative d'une phase de recherche par mot 36, un test 37 d'existence de mot suivi en cas de succès d'une phase 38 de choix dans les pages contenant le mot ou toutes les pages, une phase 39 de lecture page par page et/ou d'impression par page ou par chapitre, un test 40 de recherche supplémentaire suivi en cas de réponse négative de l'arrêt de programme 41.

En cas de réponse négative au test 37, ce test 37 d'existence de mot est suivi de la phase 34 de saisie par chapitre ou par mot. En cas de réponse positive au test 35, ce test 35 de recherche par chapitre est suivi de la phase 39 de lecture page par page et/ou d'impression par page ou par chapitre.

Ce type de menu déroulant peut être remplacé par des commandes rapides et complété par des touches fonctions, apparaissant dans des fenêtres à l'écran.

Si l'on envisage, maintenant, le cas où l'utilisateur décide de se connecter au serveur 12.

Dans ce cas l'utilisateur doit simplement donner un code d'entrée, qui peut avantageusement être son matricule, et le service auquel il souhaite être connecté. Le procédé de l'invention, au niveau du portable, va alors formater un message et provoquer la connexion automatique au serveur en envoyant ce message grâce à la carte modem 16 intégrée au portable 11.

Dès réception du message, le serveur 12 va rechercher dans la boîte aux lettres correspondant au numéro du portable les mises à jour et les messages ou notes de service qui sont destinés au couple portable/utilisateur et envoyer au portable les mises à jour et ces messages par paquets, avec une liste détaillée.

Il va de plus, si nécessaire, réaliser la connexion de l'utilisateur sur le service demandé.

Dès que la transmission des mises à jour et des messages à destination du portable commence, un message serveur "chargement en cours" apparaît sur l'écran 15 du portable 11. S'il n'y a rien dans la boîte aux lettres, il envoie un message "boîte aux lettres vide".

Dès que la transmission de ces données est terminée, le serveur 12 envoie un message pour déconnecter le portable 11. Le portable 11 vérifie alors qu'il a bien reçu et stocké les mises à jour et les messages. Dans l'affirmative, il provoque la déconnexion du serveur 12, sauf si l'utilisateur est toujours connecté sur un service, auquel cas c'est l'utilisateur qui provoquera la déconnexion.

Dans le domaine aéronautique, il existe deux types de services :
- les services gratuits, qui sont dus par la compagnie : documentation, planning des congés et des courriers (services de vol) ;
- les services payants, qui sont à la charge de l'utilisateur tels que :
   - utilisation d'une messagerie,
   - réservation voyages,
   - contact avec le planning pour des desiderata, et
   - d'une manière générale tous les services de "confort" que le personnel navigant peut trouver au sein de la compagnie ou entre différentes compagnies.

La compagnie aérienne profite donc de toute connexion au serveur pour mettre à jour la documentation.

De plus, la compagnie peut ainsi vérifier que tout son personnel a bien reçu les mises à jour et qu'elles ont bien été effectuées. Lors de la déconnexion au serveur, apparaît sur l'écran portable la liste des mises à jour et des notes de service reçues. L'utilisateur peut grâce à un menu ou à une commande rapide choisir les pages qu'il veut lire immédiatement.

On va, à présent, décrire plus précisément le procédé de l'invention en cas de dialogue portable 11/serveur 12, d'une part du côté du portable 11, d'autre part du côté du serveur 12.

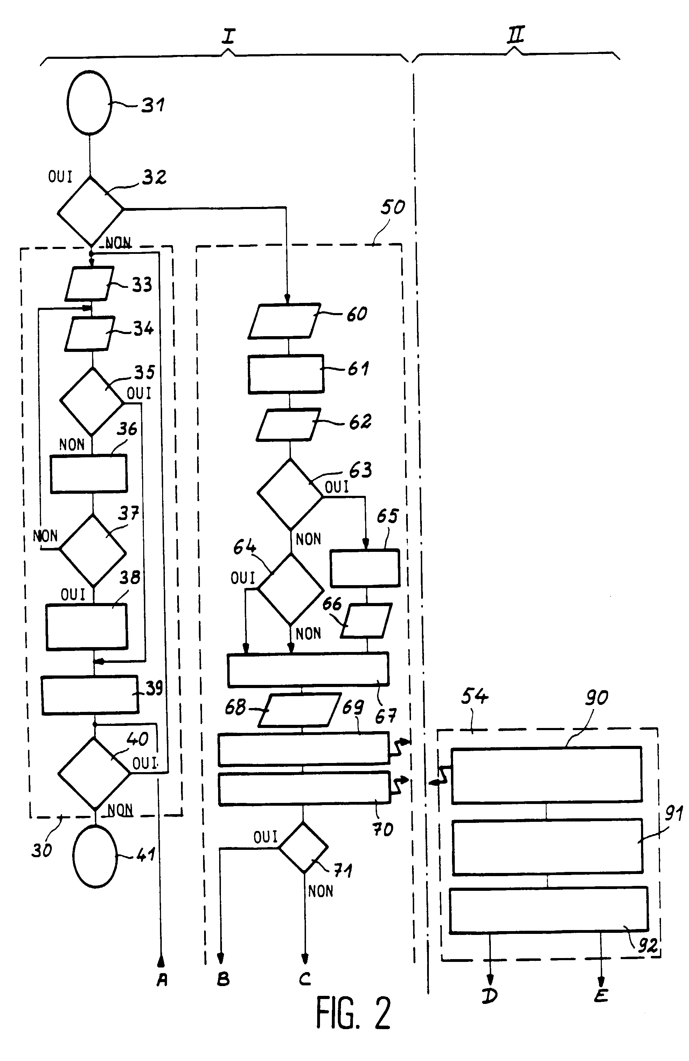

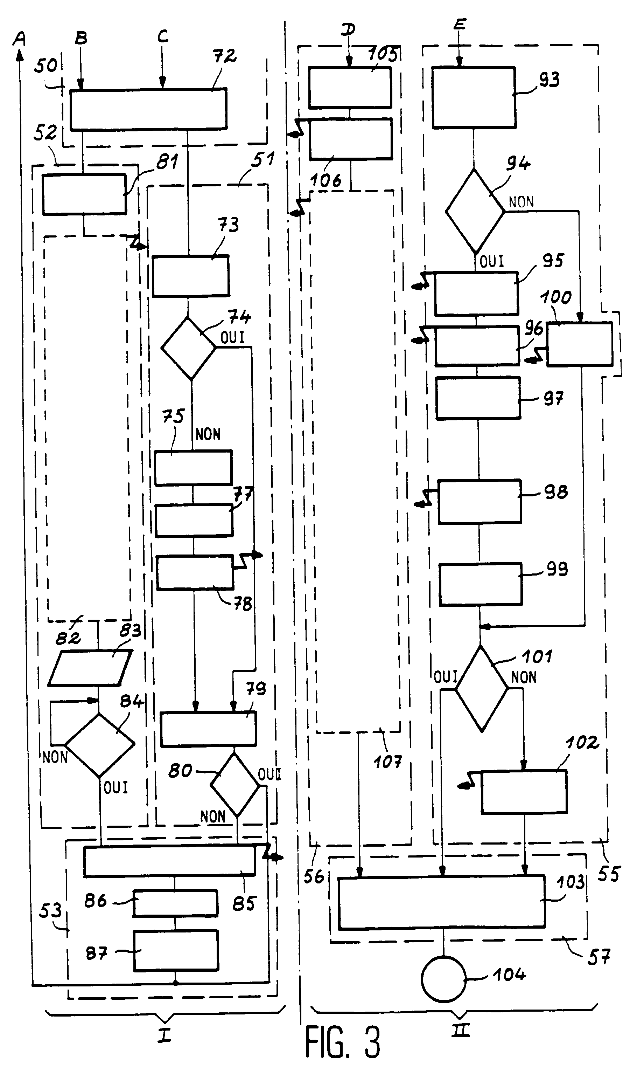

Ainsi, comme représenté aux figures 2 et 3, du côté portable I, l'étape 50 de création de message, d'envoi de message à destination du serveur 12 et de connexion automatique à celui-ci comprend :
- une phase 60 de saisie de matricule ;
- une phase 61 d'affichage de la liste des codes serveurs ;
- une phase 62 de saisie du code choisi ;
- un test 63 de code confort (ou payant) suivi soit d'un test 64 de planning en cas de réponse négative, soit d'une phase 65 d'affichage de table des services confort suivie d'une phase 66 de saisie du code choisi ;
- une phase 67 de formatage d'un message à partir du matricule de l'utilisateur, du code serveur, du service éventuellement demandé et du numéro de portable ;
- une phase 68 de validation ;
- une phase 69 de connexion automatique au serveur 12 ;
- une phase 70 d'envoi du message formaté au serveur 12 lorsque la connexion est réalisée ;
- un test 71 d'accès aux services ;
- une phase 72 de réception du message de connexion en provenance du serveur.

L'étape 51 de réception de mises à jour ou de messages stockés dans une zone mémoire liée au numéro du portable comprend :
- une phase 73 d'affichage d'un message "chargement en cours", ou "boîte aux lettres vide" informant l'utilisateur de la présence ou non de données dans sa boîte aux lettres ;
- un test 74 d'absence ou non de données dans ladite boîte aux lettres, suivi en cas de présence de telles données de :
   - une phase 75 de réception de paquets de données de mises à jour de la documentation et des notes de service par page électronique, et de création du lexique des modifications apportées,
   - une phase 77 d'émission d'un signal sonore et de disparition du message "chargement en cours",
   - une phase 78 d'envoi du message "mise à jour effectuée" et des notes de service stockées ;
- une phase 79 de déconnexion automatique si aucun code serveur n'est frappé dans un intervalle de temps, par exemple de vingt secondes ;
- un test 80 de choix d'autres fonctions.

L'étape 52 de connexion à un service demandé comprend :
- une phase 81 d'affichage du menu des fonctions autorisées par le service ;
- une phase 82 de dialogue avec le serveur 12 ;
- une phase 83 d'attente de l'appui d'une touche de fin de connexion avec le serveur ;
- un test 84 d'attente de réception d'un message "boîte aux lettres vide" ou "mise à jour effectuée".

L'étape d'affichage 53 comprend :
- une phase 85 d'envoi d'un message générant la fin de connexion ;
- une phase 86 d'affichage du listing des mises à jour et des messages ;
- une phase 87 de défilement de toutes les pages reçues ou de toutes les pages mises à jour ou de l'abandon d'un tel défilement.

Du côté serveur II, l'étape 54 de connexion au portable 11 comprend :
- une phase 90 de connexion automatique avec le portable 11 sous le code serveur choisi par l'utilisateur, avec archivage de l'heure de connexion ;
- une phase 91 de lecture du message formaté envoyé par le portable 11 comprenant le matricule de l'utilisateur, le numéro associé au portable, le code service éventuel auquel l'utilisateur fait appel, et l'archivage des numéros utilisateur/portable ;
- une phase 92 d'utilisation des informations contenues dans le message formaté.

L'étape 55 de recherche de mises à jour ou de messages dans la boîte aux lettres correspondant au numéro du portable comprend :
- une phase 93 de recherche de mises à jour à effectuer, ou de messages stockés dans la boîte aux lettres correspondant au numéro du portable ;
- un test 94 de présence de telles mises à jour ou messages, suivi dans le cas d'une telle présence :
   - d'une phase 95 de formatage des données "mises à jour" et de messages pour envoi au portable,
   - une phase 96 d'envoi du message de chargement en cours,
   - une phase 97 d'envoi des données en paquets sur le disque dur 19 du portable 11,
   - une phase 98 d'envoi du message de fin de chargement,
   - une phase 99 d'attente du message de bonne réception des données et de purge de la boîte aux lettres ;
- et dans le cas d'une boîte aux lettres vide, une phase 100 d'envoi du message "boîte aux lettres vide" ;
- un test 101 de connexion au service encore en cours avec une phase éventuelle 102 d'envoi d'un message "fin de connexion serveur".

L'étape 56 de connexion au service demandé comprend :
- une phase 105 de connexion automatique au service ;
- une phase 106 d'envoi du message "connexion serveur au portable" ;
- une phase 107 de dialogue avec le portable.

L'étape 57 de déconnexion comprend :
- une phase 103 de réception du message portable "accord pour la déconnexion" et de déconnexion du serveur, avec archivage de l'heure de fin de connexion avant l'arrêt 104 du procédé.

Au niveau du portable, le procédé de l'invention peut avantageusement comporter les caractéristiques suivantes :
- possibilité de retour au menu à tout moment par simple frappe d'une touche fonction déterminée ;
- possibilité d'imprimer à tout moment soit la page, soit le chapitre ;
- la liste "n" des mises à jour et messages reste en mémoire dans le portable jusqu'à la réception de la liste "n+2" (une liste n'est écrasée qu'à la deuxième connexion suivante) ; ainsi l'utilisateur pourra lire une modification à partir de la page "courrier arrivée" et la comparer à la version initiale ;
- les notes de service sont archivées dans le volume "notes de service en vigueur" ; les notes d'intérêt immédiat et restreint dans le temps ont un temps de validité défini par la compagnie. A la lecture de ces notes, l'utilisateur ou personnel navigant peut décider de ne pas les garder et peut les supprimer une par une. S'il ne le fait pas, un test de validité des dates, automatique à chaque mise en marche du portable, permet de supprimer les notes en fin de validité ;
- un test de capacité mémoire automatique à la mise en marche du portable permet de générer, en cas de nécessité, un message d'alerte au serveur ;
- la fonction connexion/fin du portable est inhibée tant que le chargement des mises à jour n'est pas terminé.

Au niveau du serveur, le procédé de l'invention peut avantageusement comporter les caractéristiques suivantes :
- chaque portable a une boîte aux lettres correspondant à son numéro. Ainsi un utilisateur utilisant le portable d'un autre utilisateur a une documentation à jour. Mais son portable est bien mis à jour aussi lorsqu'il l'utilise à nouveau ;
- l'utilisateur ou personnel navigant dispose d'un service "dialogue avec le serveur et maintenance", grâce auquel il peut commander la fourniture de documentation disponible qu'il désire récupérer dans la mémoire portable.

Avantageusement, le serveur peut, par le même procédé, modifier les logiciels utilisés par le portable.

Avantageusement, le procédé mis en place dans une entreprise ou au sein d'un groupe permet par ses capacités de communication interactives d'envisager de multiples utilisations, comme la formation permanente.

## Revendications

1. Procédé de mise à jour de données spécialisées évolutives dans des terminaux portables (11) comprenant chacun une unité centrale de calcul (13) reliée à une mémoire interne (14), à un écran (15), à un modem (16) et à un disque dur (19) muni d'un logiciel, ces terminaux portables, à la disposition de personnes déterminées, étant reliés à un serveur télématique spécialisé (12) par l'intermédiaire d'un réseau téléphonique commuté (10), caractérisé en ce qu'une mise à jour de ces données est effectuée automatiquement, page électronique par page électronique, dès que la connexion terminal portable (11)/ serveur (12) est établie, de manière à ce que le serveur puisse contrôler avec certitude que l'ensemble des personnes déterminées, ou utilisateur, a bien reçu l'ensemble des mises à jour.

2. Procédé selon la revendication 1, caractérisé en ce que le serveur (12) a le moyen de contrôler avec certitude que l'ensemble des personnes déterminées, ou utilisateurs, a bien reçu l'ensemble des mises à jour.

3. Procédé selon la revendication 1, caractérisé en ce qu'il comprend, du côté de la personne qui utilise les moyens de traitement (11), les étapes suivantes :
- une étapes de présentation d'un menu principal dès la mise en marche des moyens de traitement ;
- une étape de connexion automatique au serveur dès que l'utilisateur demande un service, avec envoi automatique d'un message formaté identifiant les moyens de traitement ;
- une étape de test de capacité mémoire et de test de validité des dates dès réception du message serveur indiquant la présence de mise jour et le volume de celle-ci, et d'interdiction de la déconnexion du serveur tant que l'ensemble de la mise à jour n'a pas été transféré du serveur au micro-ordinateur ou au portable, et de validation de l'ordre de déconnexion serveur si aucun service n'est utilisé ;
- une étape de remplacement des pages électroniques, page par page, partir d'une mémoire tampon.

4. Procédé selon l'une quelconque des revendications précédentes, caractérisé en ce qu'il comprend, du côté de la personne qui utilise les moyens de traitement (11), les étapes suivantes :
- soit une étape (30) de gestion bibliothèque, les moyens de traitement fonctionnant en local ;
- soit, si la personne concernée choisit de se connecter au serveur (12) :
• une étape (50) de création de message comportant la saisie d'un code d'entrée et le choix éventuel d'un service, d'envoi de message à destination dudit serveur (12) et de connexion automatique à ce serveur (12), suivie
• d'une étape (51) de réception des mises à jour ou des messages stockés dans une zone mémoire liée au numéro des moyens de traitement, en paralléle, lorsqu'un service a été sélectionné par ladite personne, avec
• une étape (52) de connexion au service demandé.

5. Procédé selon l'une quelconque des revendications précédentes, caractérisé en ce qu'il comprend, du côté du serveur (II), les étapes suivantes :
- une étape (54) de connexion aux moyens de traitement utilisés par la personne concernée ;
- une étape (55) de recherche de mises à jour ou de messages dans la zone à mémoire liée au numéro des moyens de traitement et d'envoi de ces données par lots, après envoi d'un message signalant le début de chargement, avec en parallèle, lorsqu'un service a été sélectionné :
- une étape (56) de connexion au service éventuel demandé et, en fin de transmisson,
- une étape (57) de déconnexion.

6. Procédé selon la revendication 4, caractérisé en ce que l'étape (30) de gestion bibliothèque comprend les phases suivantes :
- une phase de saisie par volume (33) ;
- une phase (34) de saisie par chapitre ou par mot ;
- un test (35) de recherche par chapitre suivi, en cas de réponse négative :
- d'une phase de recherche par mot (36) ;
- un test (37) d'existence de mot suivi en cas de succès d'une phase (38) de choix dans les pages contenant le mot ou toutes les pages ;
- une phase (39) de lecture page par page et/ou d'impression par page ou par chapitre ;
- un test (40) de recherche supplémentaire suivi en cas de réponse négative de l'arrêt de programme (41) ;
et en ce qu'en cas de réponse négative au test (37), ce test (37) d'existence de mot est suivi de la phase (34) de saisie par chapitre ou par mot, et en cas de réponse positive au test (35), ce test (35) de recherche par chapitre est suivi de la phase (39) de lecture page par page et/ou d'impression par page ou par chapitre.

7. Procédé selon la revendication 4, caractérisé en ce que l'étape (50) de création de message, d'envoi de message à destination du serveur (12) et de connexion automatique à celui-ci comprend :
- une phase (60) de saisie de code d'entrée ;
- une phase (61) d'affichage de la liste des codes serveurs ;
- une phase (62) de saisie du code serveur choisi ;
- un test (63) de code confort suivi soit d'un test (64) de planning en cas de réponse négative, soit d'une phase (65) d'affichage de table des services confort suivie d'une phase (66) de saisie du code choisi ;
- une phase (67) de formatage d'un message à partir du code d'entrée, du code serveur, du service éventuellement demandé et d'un numéro associé aux moyens de traitement ;
- une phase (68) de validation ;
- une phase (69) de connexion automatique au serveur (12) ;
- une phase (70) d'envoi du message formaté au serveur (12) lorsque la connexion est réalisée ;
- un test (71) d'accès aux services ;
- une phase (72) de réception du message de connexion en provenance du serveur.

8. Procédé selon la revendication 4, caractérisé en ce que l'étape (51) de réception de mises à jour ou de messages stockés dans une zone mémoire Liée au code d'entrée comprend :
- une phase (73) d'affichage d'un message "chargement en cours", ou "boîte aux lettres vide" informant l'utilisateur de la présence ou non de données dans sa boite aux lettres ;
- un test (74) d'absence ou non de données dans ladite botte aux lettres, suivi en cas de présence de telles données de :
• une phase (75) de réception de paquets de données par page électronique, et de création du lexique des modifications apportées,
• une phase (77) d'émission d'un signal sonore et de disparition du message "chargement en cours",
• une phase (78) d'envoi du message "mise à jour effectuée" ;
- une phase (79) de déconnexion automatique si aucun code serv-eur n'est frappé dans un certain intervalle de temps ;
- un test (80) de choix d'autres fonctions.

9. Procédé selon la revendication 4, caractérisé en ce que l'étape (52) de connexion à un service demandé comprend :
- une phase (81) d'affichage du menu des fonctions autorisées par le service ;
- une phase (82) de dialogue avec le serveur (12) ;
- une phase (83) d'attente de l'appui d'une touche de fin de connexion avec le serveur ;
- un test (84) d'attente de réception d'un message "boite aux lettres vide" ou "mise à jour effectuée".

10. Procédé selon la revendication 4, caractérisé en ce que l'étape d'affichage (53) comprend :
- une phase (85) d'envoi d'un message générant la fin de connexion ;
- une phase (86) d'affichage du listing des mises à jour et des messages ;
- une phase (87) de défilement de toutes les pages reçues, ou de toutes les pages mises à jour ou de toutes les pages abandonnées.

11. Procédé selon la revendication 5, caractérisé en ce que l'étape (54) de connexion aux moyens de traitement (11) comprend :
- une phase (90) de connexion automatique avec les moyens de traitement (11) sous le code serveur choisi par l'utilisateur, avec archivage de l'heure de connexion ;
- une phase (91) de lecture du message formaté envoyé par les moyens de traitement (11) comprenant le code d'entrée, le numéro associé aux moyens de traitement, le code service éventuel auquel l'utilisateur fait appel, et l'archivage de ces numéros ;
- une phase (92) d'utilisation des informations contenues dans le message formaté.

12. Procédé selon la revendication 5, caractérisé en ce que l'étape (55) de recherche de mise, à jour ou de messages dans la boîte aux lettres correspondant au numéro associé aux moyens de traitement comprend :
- une phase (93) de recherche de mises à jour à effectuer, ou de messages stockés dans la boîte aux lettres correspondant au numéro associé aux moyens de traitement ;
- un test (94) de présence de telles mises à jour ou de tels messages, suivis dans le cas d'une telle présence :
• d'une phase (95) de formatage des données "mises à jour" et de messages pour envoi aux moyens de traitement,
• d'une phase (96) d'envoi du message de chargement en cours,
• d'une phase (97) d'envoi des données en paquets,
• d'une phase (98) d'envoi du message de fin de chargement,
• d'une phase (99) d'attente du message, de bonne réception des données et de purge de la boîte aux lettres ;
- et dans le cas d'une boîte aux lettres vide, d'une phase (100) d'envoi du message "boîte aux lettres vide" ;
- d'un test (101) de connexion au service encore en cours avec une phase éventuelle (102) d'envoi d'un message "fin de connexion serveur".

13. Procédé selon la revendication 5, caractérisé en ce que l'étape (56) de connexion au service demandé comprend :
- une phase (105) de connexion automatique au service ;
- une phase (106) d'envoi du message "connexion serveur au portable" ;
- une phase (107) de dialogue avec les moyens de traitement (11).

14. Procédé selon la revendication 5, caractérisé en ce que l'étape (57) de déconnexion comprend une phase (103) de réception du message "accord pour La déconnexion" et de déconnexion du serveur, avec archivage de l'heure de fin de connexion avant l'arrêt (104) du procédé.

15. Procédé selon l'une quelconque des revendications 1 à 14, caractérisé en ce que l'ensemble des données évolutives forment une documentation technique et/ou réglementaire.

16. Procédé selon la revendication 15, caractérisé en ce que l'ensemble des personnes déterminées correspond au personnel délocalisé d'une entreprise comme le personnel navigant d'une compagnie aérienne.

17. Procédé selon la revendication 16, caractérisé en ce que le code d'entrée est le matricule du personnel navigant concerné.

18. Système de mise en oeuvre du procédé selon l'une quelconque des revendications 1 à 17, caractérisé en ce qu'il comprend :
- des moyens de traitement (11), dont le disque dur contient des programmes permettant l'utilisation du procédé, associés à des moyens de transmission (16) sur le réseau téléphonique commuté (10) à la disposition de chaque personne concernée ;
- une unité de traitement centralisée (12) associée à des moyens de transmission (24) sur ledit réseau, ayant accès à des moyens de stockage (22) desdites données spécialisées,
- des moyens de mise à jour automatique des données, page électronique par page électronique, dès que la connexion terminal portable/serveur est établie.

19. Système selon la revendication 18, caractérisé en ce qu'il comprend un ordinateur portable ou un micro-ordinateur (11), contenant les moyens de traitement et les moyens de transmission, à la disposition de chaque personne concernée.

20. Système selon la revendication 19, caractérisé en ce que chaque ordinateur portable ou micro-ordinateur (11) comprend une unité centrale de calcul (13), reliée à une mémoire interne (14), à un écran (15), à un modem (16), à un disque dur (19) contenant les programmes nécessaires à l'utilisation du procédé ; une imprimante (18) pouvant être connectée à cet ordinateur portable ou à ce micro-ordinateur (11).

21. Système selon la revendication 18, caractérisé en ce que l'unité de traitement centralisée forme un serveur télématique spécialisé (12) qui comprend une unité centrale de calcul (20) reliée à un scanner (21), à une mémoire (22), à un disque dur (23) et à un modem (24).

22. Système selon l'une quelconque des revendications 18 à 21, caractérisé en ce que les données spécialisées évolutives forment une documentation technique et/ou réglementaire.

23. Système selon la revendication 22, caractérisé en ce que l'ensemble des personnes déterminées correspond au personnel délocalisé d'une entreprise comme le personnel navigant d'une compagnie aérienne.

24. Terminal portable comprenant une unité centrale de calcul (13) relié à une mémoire interne (14), à un écran (15), à un modem (16), et à un disque dur (19) muni d'un logiciel (17), caractérisé en ce qu'il comprend :
- des moyens aptes à recevoir des données émises par un serveur télématique spécialisé (12) au travers d'un réseau téléphonique commuté (10), et notamment une mise à jour automatique de ces données lors de l'établissement de la, connexion avec ce serveur; de manière à ce que le serveur puisse contrôler avec certitude que l'utilisateur de ce terminal a bien reçu l'ensemble des mises à jour qui lui sont destinées;
- des moyens aptes à émettre des messages vers ce serveurs ;
- des moyens de mise à jour automatique des données, page électronique par page électronique, dès que la connexion terminal portable/serveur est établie.

25. Serveur télématique spécialisé comprenant une unité centrale de calcul (20) reliée à un scanner (21), à une mémoire (22), à un disque dur (23) et à un modem (24), caractérisé en ce qu'il comprend :
- des moyens aptes à émettre des données vers plusieurs terminaux portables et notamment les données de mise à jour ou de messages mémorisées dans les boîtes aux lettres correspondant au numéro de chaque portable lors de la connexion avec celui-ci ;
de manière à ce que le serveur puisse contrôler avec certitude que l'ensemble des utilisateurs de terminaux a bien reçu l'ensemble des mises à jour correspondantes;
- des moyens aptes à recevoir des messages de chaque terminal portables;
- des moyens de mise à jour automatique des données, page électronique par page électronique, dès que la connexion terminal portable/serveur est établie.

## Patentansprüche

1. Verfahren zur Fortschreibung von spezialisierten sich entwickelnden Daten in tragbaren Terminals (11), jeweils bestehend aus einer zentralen Rechnereinheit (13), verbunden mit einem internen Speicher (14), einem Bildschirm (15) einem Modem (16) und mit einer Festplatte (19), ausgestattet mit einer Software, wobei diese tragbaren Terminals, zur Verfügung von bestimmten Personen, an einen spezialisierten Telematik-Server (12) über ein geführtes Telefonnetz (10) angeschlossen sind, dadurch gekennzeichnet, daß eine Fortschreibung dieser Daten automatisch ausgeführt wird, elektronische Seite für elektronische Seite, sobald die Verbindung tragbares Terminal (11) / Server (12) hergestellt ist, auf eine Weise, daß der Server mit Sicherheit kontrollieren kann, daß die Gesamtheit der bestimmten Personen, bzw. Benutzer, alle Fortschreibungen richtig erhalten hat.

2. Verfahren gemäß Anspruch 1, dadurch gekennzeichnet, daß der Server (12) die Möglichkeit hat mit Sicherheit zu kontrollieren, daß die Gesamtheit der bestimmten Personen, bzw. Benutzer, alle Fortschreibungen richtig erhalten hat.

3. Verfahren gemäß Anspruch 1, dadurch gekennzeichnet, daß es auf Seite der Person, welche die Verarbeitungsmittel (11) benutzt, die folgenden Schritte enthält:
- einen Schritt der Darstellung eines Hauptmenüs sobald die Verarbeitungsmittel eingeschaltet werden;
- einen Schritt der automatischen Verbindung mit dem Server sobald der Benutzer einen Service aufruft, mit automatischer Darstellung einer formatierten Meldung, welche die Verarbeitungsmittel kennzeichnet;
- einen Schritt zum Test der Speicherkapazität und Test der Gültigkeit der Daten bei Erhalt der Servermeldung, welche die Anwesenheit der Fortschreibung und deren Umfang anzeigt und Sperre der Trennung des Servers solange die Gesamtheit der Fortschreibung nicht vom Server zum Mikro- oder tragbaren Computer und der Validierung des Server-Trennungsbefehls, wenn kein Service benutzt wird;
- einen Schritt des Austauschs der elektronischen Seiten, Seite für Seite, ausgehend von einem Pufferspeicher.

4. Verfahren gemäß irgendeinem der vorausgehenden Ansprüche, dadurch gekennzeichnet, daß es auf Seite der Person, welche die Verarbeitungsmittel (11) benutzt, die folgenden Schritte enthält:
- entweder einen Schritt (30) der Bibliothek-Verwaltung, wenn die Verarbeitungsmittel lokal arbeiten;
- oder, wenn die betreffende Person wählt, sich an den Server (12) anzuschließen:
• einen Schritt (50) der Erstellung einer Meldung bestehend aus der Eingabe eines Eingangscodes und der eventuellen Wahl eines Services, der Sendung einer Meldung an den besagten Server (12) und der automatischen Verbindung mit diesem Server (12), gefolgt von
• einem Schritt (51) des Empfangs der Fortschreibungen oder der in einem mit der Nummer der Verarbeitungsmittel parallel verbundenen Speicherbereich gespeicherten Meldungen, wenn ein Service von der besagten Person gewählt wurde, mit
• einem Schritt (52) der Verbindung mit dem gefragten Service.

5. Verfahren gemäß irgendeinem der vorausgehenden Ansprüche, dadurch gekennzeichnet, daß es auf Seite des Servers (11) die folgenden Schritte enthält:
- einen Schritt (54) der Verbindung mit den von der betreffenden Person benutzten Verarbeitungsmitteln;
- einen Schritt (55) der Suche von Fortschreibungen oder Meldungen in dem mit der Nummer der Verarbeitungsmittel verbunden Speicherbereich und Sendung dieser Daten in Stapeln, nach Sendung einer Meldung, welche den Ladebeginn ankündigt, mit in parallel, wenn ein Service gewählt wurde:
- einem Schritt (56) der Verbindung mit dem eventuell gefragten Service und, am Ende der Übermittlung,
- einem Schritt (57) der Trennung.

6. Verfahren gemäß Anspruch 4, dadurch gekennzeichnet, daß der Schritt (30) der Bibliothekverwaltung die folgenden Phasen enthält:
- eine Phase der Eingabe pro Volumen (33);
- eine Phase (34) der Eingabe pro Kapitel oder pro Wort;
- einen Test (35) der Suche pro Kapitel, im Fall einer negativen Antwort, gefolgt von
- einer Phase der Suche pro Wort (36)
- einem Test (37) der Wortexistenz, gefolgt, im Erfolgsfall, von einer Phase (38) der Wahl der Seiten, welche das Wort enthalten oder aller Seiten;
- einer Phase (39) des Lesens Seite für Seite und/oder dem Ausdruck pro Seite oder pro Kapitel;
- einem Test (40) der zusätzlichen Suche, im Fall einer negativen Antwort gefolgt von dem Abschalten des Programms (41);
und daß im Fall einer negativen Antwort zum Test (37), dieser Test (37) der Wortexistenz von der Phase (34) der Eingabe pro Kapitel oder pro Wort gefolgt wird, und im Fall einer positiven Antwort auf den Test (35), dieser Test (35) der Suche pro Kapitel von der Phase (39) des Lesens Seite für Seite und/oder des Ausdrucks pro Seite oder pro Kapitel gefolgt wird.

7. Verfahren gemäß Anspruch 4, dadurch gekennzeichnet, daß der Schritt (50) der Erstellung einer Meldung, der Sendung der Meldung zum Server (12) und der automatischen Verbindung zu diesem die folgenden Phasen enthält:
- eine Phase (60) der Eingabe des Eingangscodes;
- eine Phase (61) der Anzeige der Liste der Servercodes;
- eine Phase (62) der Eingabe des gewählten Servercodes;
- einen Test (63) des Komfort-Codes, gefolgt entweder von einem Zeitplantest (64) im Fall einer negativen Antwort oder von einer Phase (65) der Anzeige einer Tabelle der Komfort-Services, gefolgt von einer Phase (66) der Eingabe des gewählten Codes;
- eine Phase (67) der Formatierung einer Meldung ausgehend vom Eingangscode, vom Servercode, des eventuell gefragten Services und einer den Verarbeitungsmitteln zugeordneten Nummer;
- eine Phase (68) der Validierung;
- eine Phase (69) der automatischen Verbindung mit dem Server (12);
- eine Phase (70) der Sendung der formatierten Meldung zum Server (12), wenn die Verbindung hergestellt ist;
- ein Test (71) des Servicezugangs;
- eine Phase (72) des Empfangs der Verbindungsmeldung vom Server.

8. Verfahren gemäß Anspruch 4, dadurch gekennzeichnet, daß der Schritt (51) des Empfangs der Fortschreibungen oder der in einem mit dem Eingangscode verbundenen Speicherbereich gespeicherten Meldungen die folgenden Phasen enthält:
- eine Phase (73) der Anzeige einer Meldung "Ladung im Gang", oder "Briefkasten leer", welche den Benutzer von der Anwesenheit oder Abwesenheit von Daten in seinem Briefkasten informiert.
- einen Test (74) der Abwesenheit oder Anwesenheit von Daten in dem besagten Briefkasten, im Fall der Anwesenheit solcher Daten gefolgt von:
• einer Phase (75) des Empfangs von Datenpaketen pro elektronische Seite, und der Erstellung eines Lexikons der vorgenommenen Änderungen,
• einer Phase (77) der Sendung eines akustischen Signals und des Löschens der Meldung "Ladung im Gang",
• einer Phase (78) der Sendung der Meldung "Fortschreibung ausgeführt";
- eine Phase (79) der automatischen Trennung, wenn innerhalb einer gewissen Zeit kein Server-Code eingegeben wird;
- einen Test (80) der Wahl anderer Funktionen.

9. Verfahren gemäß Anspruch 4, dadurch gekennzeichnet, daß der Schritt (52) der Verbindung mit einem gefragten Service die folgenden Phasen enthält:
- eine Phase (81) der Anzeige des Menüs der von dem Service erlaubten Funktionen;
- eine Phase (82) des Dialogs mit dem Server (12);
- eine Phase (83) Warten auf das Drücken einer Taste zur Beendigung der Verbindung mit dem Server;
- einen Test (84) des Wartens auf den Empfang einer Meldung "Briefkasten leer" oder "Fortschreibung ausgeführt".

10. Verfahren gemäß Anspruch 4, dadurch gekennzeichnet, daß der Schritt der Anzeige (53) die folgenden Phasen enthält:
- eine Phase (85) der Sendung einer Meldung, welche die Beendigung der Verbindung generiert;
- eine Phase (86) der Anzeige der Liste der Fortschreibungen und der Meldungen;
- eine Phase (87) des Ablaufs aller empfangenen Seiten, oder aller fortgeschriebenen Seiten oder aller aufgegebenen Seiten.

11. Verfahren gemäß Anspruch 5, dadurch gekennzeichnet, daß der Schritt (54) der Verbindung mit den Verarbeitungsmitteln (11) die folgenden Phasen enthält:
- eine Phase (90) der automatischen Verbindung mit den Verarbeitungsmitteln (11) unter dem vom Benutzer gewählten Server-Code, mit Archivierung der Uhrzeit der Verbindung.
- eine Phase (91) des Lesens der formatierten von den Verarbeitungsmitteln (11) gesendeten Meldung zusammen mit dem Eingangscode, der zu den Verarbeitungsmitteln gehörigen Nummer, dem eventuellen Servicecode, den der Benutzer wählt und der Archivierung dieser Nummern;
- eine Phase (92) der Benutzung der in der formatierten Meldung enthaltenen Informationen.

12. Verfahren gemäß Anspruch 5, dadurch gekennzeichnet, daß der Schritt (55) der Suche der Fortschreibungen oder Meldungen im Briefkasten entsprechend der zu den Verarbeitungsmittel gehörigen Nummer die folgenden Phasen enthält:
- eine Phase (93) der Suche der auszuführenden Fortschreibungen oder der im Briefkasten entsprechend der zu den Verarbeitungsmittel gehörigen Nummer gespeicherten Meldungen;
- einen Test (94) der Anwesenheit solcher Fortschreibungen oder solcher Meldungen, und im Fall einer solchen Anwesenheit gefolgt von:
• einer Phase (95) der Formatierung der Daten "Fortschreibung" und der Meldungen zur Sendung an die Verarbeitungsmittel,
• einer Phase (96) der Sendung der Meldung Ladung im Gang,
• einer Phase (97) der Sendung der Daten in Paketen
• einer Phase (98) der Sendung der Meldung Ende der Ladung,
• einer Phase (99) des Wartens auf die Meldung des einwandfreien Empfangs der Daten und der Entleerung des Briefkastens;
- und im Fall eines leeren Briefkastens, einer Phase (100) der Sendung der Meldung "Briefkasten leer";
- einem Test (101) der noch im Gang befindlichen Verbindung mit dem Service mit einer eventuellen Phase (102) der Sendung einer Meldung "Ende der Verbindung Server".

13. Verfahren gemäß Anspruch 5, dadurch gekennzeichnet, daß der Schritt (56) der Verbindung mit dem gefragten Service die folgenden Phasen enthält:
- eine Phase (105) der automatischen Verbindung mit dem Service;
- eine Phase (106) der Sendung der Meldung "Verbindung Server mit tragbarem PC";
- eine Phase (107) des Dialogs mit den Verarbeitungsmitteln (11).

14. Verfahren gemäß Anspruch 5, dadurch gekennzeichnet, daß der Schritt (57) der Trennung eine Phase (103) des Empfangs der Meldung "Einverständnis zur Trennung" und der Trennung vom Server enthält, mit Archivierung der Uhrzeit des Endes der Verbindung vor dem Abschalten (104) des Verfahrens.

15. Verfahren gemäß irgendeinem der Ansprüche 1 bis 14, dadurch gekennzeichnet, daß die Gesamtheit dieser entwicklungsfähigen Daten eine technische und/oder vorschriftsmäßige Dokumentation bilden.

16. Verfahren gemäß Anspruch 15, dadurch gekennzeichnet, daß die Gesamtheit der bestimmten Personen dem delokalisierten Personal eines Unternehmens entspricht, wie das fliegende Personal einer Fluggesellschaft.

17. Verfahren gemäß Anspruch 16, dadurch gekennzeichnet, daß der Eingangscode die Stammnummer des betreffenden fliegenden Personals ist.

18. System zum Einsatz des Verfahrens gemäß irgendeinem der Ansprüche 1 bis 17, dadurch gekennzeichnet, daß es die folgenden Mittel enthält:
- Verarbeitungsmittel (11), deren Festplatte Programme enthält, welche die Benutzung des Verfahrens ermöglichen zusammen mit Übertragungsmitteln (16) auf das geführte Telefonnetz (10) zur Verfügung jeder betroffenen Person;
eine zentralisierte Verarbeitungseinheit (12) zusammen mit Übertragungsmitteln (24) auf das besagte Netz, welche Zugang zu Speichermitteln (22) für die besagten spezialisierten Daten haben;
- Mittel der automatischen Fortschreibung der Daten, elektronische Seite für elektronische Seite, sobald die Verbindung tragbares Terminal / Server hergestellt ist.

19. System gemäß Anspruch 18, dadurch gekennzeichnet, daß es einen tragbaren Computer bzw. einen Mikrocomputer (11) enthält mit den Mitteln zur Verarbeitung und den Mitteln zur Übertragung zur Verfügung jeder betroffenen Person.

20. System gemäß Anspruch 19, dadurch gekennzeichnet, daß jeder tragbare Computer bzw. Mikrocomputer (11) eine zentrale Rechnereinheit (13) enthält, verbunden mit einem internen Speicher (14), einem Bildschirm (15), einem Modem (16), einer Festplatte (19) mit den für die Benutzung des Verfahrens erforderlichen Programmen; und einen Drucker (18), der an diesen tragbaren Computer bzw. Mikrocomputer (11) angeschlossen werden kann.

21. System gemäß Anspruch 18, dadurch gekennzeichnet, daß die zentralisierte Verarbeitungseinheit einen spezialisierten Telematik-Server (12) bildet, der eine zentrale Rechnereinheit (20) enthält, verbunden mit einem Scanner (21), einem Speicher (22), einer Festplatte (23) und einem Modem (24).

22. System gemäß irgendeinem der Ansprüche 18 bis 21, dadurch gekennzeichnet, daß die spezialisierten entwicklungsfähigen Daten eine technische und/oder vorschriftsmäßige Dokumentation bilden.

23. System gemäß Anspruch 22, dadurch gekennzeichnet, daß die Gesamtheit der bestimmten Personen dem delokalisierten Personal eines Unternehmens entspricht, wie das fliegende Personal einer Fluggesellschaft.

24. Tragbares Terminal mit einer zentralen Rechnereinheit (13), verbunden mit einem internen Speicher (14), einem Bildschirm (15) einem Modem (16) und einer Festplatte (19) ausgestattet mit einer Software (17), dadurch gekennzeichnet, das es die folgenden Mittel enthält:
- Mittel, fähig die von einem spezialisierten Telematik-Server (12) über ein geführtes Telefonnetz (10) gesendeten Daten und besonders eine automatische Fortschreibung dieser Daten bei der Herstellung der Verbindung mit diesem Server zu empfangen, auf eine Weise, daß der Server mit Sicherheit kontrollieren kann daß der Benutzer dieses Terminals die Gesamtheit der für ihn bestimmten Fortschreibungen richtig erhalten hat;
- Mittel, fähig an diesen Server Meldungen zu senden;
- Mittel der automatischen Fortschreibung der Daten, elektronische Seite für elektronische Seite, sobald die Verbindung tragbares Terminal / Server hergestellt ist.

25. Spezialisierter Telematik-server mit einer zentralen Rechnereinheit (20), verbunden mit einem Scanner (21) einem Speicher (22), einer Festplatte (23) und einem Modem (24), dadurch gekennzeichnet, daß er die folgenden Mittel enthält:
- Mittel, fähig Daten an mehrere tragbaren Terminals zu senden und besonders die Fortschreibungsdaten und Meldungen, gespeichert in den Briefkästen entsprechend der Nummer jedes Terminals bei der Verbindung mit diesem letzteren; auf eine Weise, daß der Server kontrollieren kann daß die Gesamtheit der Benutzer von Terminals alle entsprechenden Fortschreibungen erhalten hat;
- Mittel, fähig die Meldungen jedes tragbaren Terminals zu empfangen;
- Mittel der automatischen Fortschreibung der Daten, elektronische Seite für elektronische Seite, sobald die Verbindung tragbares Terminal / Server hergestellt ist.

## Claims

1. Process for updating evolving dedicated data in portable terminals (11) each comprising a CPU (13) connected to an internal memory (14), a monitor (15), a modem (16) and a hard disc (19) equipped with software, these portable terminals, intended for use by determined persons, being connected to a dedicated telematics server (12) through a switched telephone network (10), characterized in that data is updated automatically, electronic page by electronic page, as soon as the portable terminal (11)/server (12) connection is made, such that the server is able to ensure that all determined persons or users have correctly received all updates.

2. Process as per claim 1 characterized in that the server (12) is equipped with the means for ensuring that all determined persons or users have correctly received all updates.

3. Process as per claim 1 characterized in that the following stages are included on the data processing equipment (11) user's side:
- a stage displaying a main menu as soon as the processing means are set into operation;
- a stage ensuring automatic connection to the server as soon as a service is requested by the user, with automatic transmission of a formatted message identifying the processing means;
- a stage comprising a test of the storage capacity and a dates validity check on reception of the server message indicating the presence of an update along with its volume, with inhibition of server disconnection as long as the entire update has not been transferred from the server to the PC or portable, and validation of the server disconnection instruction if no service is used;
- a stage consisting of replacement of the electronic pages, page by page, from a buffer memory.

4. Process as per any of the above claims characterized in that the following stages are included on the data processing means (11) user's side:
- either, a library management stage (30) in which the processing means operate in local mode;
- or, if the person concerned opts for connection to the server (12):
• a message creation stage (50) with entry of an input code and selection of a service if required, transmission of a message to the said server (12) and automatic connection to this server (12), followed by
• a stage (51) for reception of updates or messages from a memory field associated with the processing equipment number, in parallel, when a service has been selected by the said person, with
• a stage (52) for connection to the requested service.

5. Process as per any of the above claims characterized in that the following stages are included on the server (11) side:
- a stage (54) for connection to the processing means used by the person concerned;
- a stage (55) searching for updates or messages in the memory field related to the number of the processing means and transmission of these data in batches, after transmission of a message indicating the start of loading with, in parallel, if a service has been selected:
- a stage (56) for connection to any service requested and, at the end of transmission;
- a disconnection stage (57).

6. Process as per claim 4 characterized in that a library management stage (30) includes the following phases:
- a phase (33) for entry per volume;
- a phase (34) for entry per chapter or word;
- a search test (35) per chapter followed, in the event of a negative response, by:
- a search phase (36) per word;
- a word detection test (37) followed if successful by a phase (38) selecting from the pages containing that word or from all pages;
- a page-by-page reading phase (39) and/or printing per page or per chapter;
- a supplemental search test (40) followed in the event of a negative response, by a program stop (41);
and in the event of a negative response to the test (37), this word detection test (37) is followed by the entry phase (34) per chapter or per word, and in the event of a positive response to the test (35), this search by chapter test (35) is followed by page-by-page reading and/or printing per page or per chapter phase (39).

7. Process as per claim 4 characterized in that stage (50) involving message creation, message transmission to the server (12) and automatic connection to the server includes:
- a phase (60)for entering input code;
- a phase (61) for displaying the list of server codes;
- a phase (62) for entering the selected server code;
- a comfort code test (63) followed either by a scheduling test (64) in the event of a negative response, or a phase (65) for displaying the list of comfort services followed by a phase (66) for entering the selected code;
- a message formatting phase (67) based on the input code, the server code, any service requested and a number associated to the processing means (11);
- a validation phase (68);
- a phase (69) for automatic connection to the server (12);
- a phase (70) for transmission of the formatted message to the server (12) once the connection has been made;
- a services access test (71);
- a phase (72) for reception of the connection message from the server.

8. Process as per claim 4 characterized in that the stage (51) for reception of updates or messages from a memory field associated with the input code includes:
- a message display phase (73), either "Loading" or "Mailbox empty", to inform the user whether or not data are present in his mailbox;
- a test (74) to check whether or not data are present in the said mailbox, followed, if data are present, by:
• a phase (75) for reception of data packets per electronic page and creation of a glossary of the modifications made,
• a phase (77) for transmission of an audible signal and cancellation of the "Loading" message,
• a phase (78) for transmission of the message "Updating completed";
- an automatic disconnection phase (79) if no server code is entered within a given time delay;
- a test (80) for detecting if other functions have been selected.

9. Process as per claim 4 characterized in that stage (52), connection to a requested service, includes:
- a phase (81) displaying the menu of functions authorized by the service:
- a phase (82) for dialoguing with the server (12);
- a phase (83) on standby for an end server connection key to be pressed;
- a test (84) on standby to receive a "Mailbox empty" or "Update completed" message.

10. Process as per claim 4 characterized in that the display stage (53) includes:
- a phase (85) for transmission of a message to generate an end of connection;
- a phase (86) displaying the list of updates and messages;
- a phase (87) scrolling all pages received or all pages updated or all pages scrapped.

11. Process as per claim 5 characterized in that stage (54) involving connection to processing means (11) includes:
- a phase (90) for automatic connection to the processing means (11) under the server code selected by the user, with recording of time on;
- a phase (91) for reading the formatted message transmitted by the processing means (11) including the input code, the number associated with the processing means, the code of any service called by the user, and recording of these numbers;
- a phase (92) for utilization of the data contained in the formatted message.

12. Process as per claim 5 characterized in that stage (55) involving searching for updates or messages in the mailbox corresponding to the number associated with the processing means includes:
- a phase (93) for searching for updates to be effected or messages stored in the mailbox corresponding to the number associated with the processing means;
- a test (94) for detection of the presence of such updates or messages followed, if presence is detected, by:
• a phase (95) formatting the "update" data and message for transmission to the processing means,
• a phase (96) for transmission of the "Loading" message,
• a phase (97) for transmission of data in packets,
• a phase (98) for transmission of the "Loading completed" message,
• a phase (99) on standby for acknowledgement of data reception and clearing of mailbox;
- and, if the mailbox is empty, a phase (100): transmission of the message "Mailbox empty";
- test (101) tests if connection to the service is still active and if required a message transmission phase (102) "End of server connection".

13. Process as per claim 5 characterized in that stage (56) connecting to the requested service includes:
- a phase (105) for automatic connection to the service;
- a phase (106) for transmission of the message "Server - portable connection";
- a phase (107) for dialoguing with the processing means (11).

14. Process as per claim 5 characterized in that stage (57) for disconnection, includes a phase (103) for reception of the message "Disconnection authorized" and disconnection from the server, with recording of time off before stoppage (104) of the process.

15. Process as per any of claims 1 to 14 characterized in that all modifiable data constitute technical and/or regulatory documentation.

16. Process as per claim 15 characterized in that the term "all determined persons" designates the delocalized personnel of a company, such as the aircrew of an airline company.

17. Process as per claim 16 characterized in that the input code is the ID number of the aircrew concerned.

18. System for implementation of the process as per any of claims 1 to 17 characterized in that the system includes
- processing means (11) with a hard disc containing the programs required to run the process, plus the means for transmission (16) on the switched telephone network (10) available to each person concerned;
- a centralized processor (12) having the means for transmission (24) on the said network, and access to means for storage (22) of the said dedicated data;
- the means for automatic data updating electronic page by electronic page, as soon as the portable terminal/server connection is made.

19. System as per claim 18 characterized in that the system includes a portable computer or PC (11) containing processing and transmission means, available to each person concerned.

20. System as per claim 19 characterized in that each portable computer or PC (11) includes a CPU (13) connected to an internal memory (14), a monitor (15), a modem (16) and a hard disc (19) containing the programs required to run the process; with the possibility of connecting a printer (18) to this portable computer or PC (11).

21. System as per claim 18 characterized in that the centralized processor constitutes a dedicated telematics server (12) which includes a CPU (20) connected to a scanner (21), a memory (21), a hard disc (23) and a modem (24).

22. System as per any of claims 18 to 21 characterized in that the dedicated modifiable data constitute technical and/or regulatory documentation.

23. System as per claim 22 characterized in that the term "all determined persons" designates the delocalized personnel of a company, such as the aircrew of an airline company.

24. Portable terminal including a CPU (13) connected to an internal memory (14), a monitor (15), a modem (16) and a hard disc (19) equipped with software (17) characterized in that it includes
- suitable means for receiving the data transmitted by a dedicated telematics server (12) through a switched telephone network (10), in particular automatic updates of these data on connection to the server; so that the server can ensure that the user of that terminal has received all the relevant updates;
- suitable means for transmitting messages to the server;
- the means for automatic data updating, electronic page by electronic page, as soon as the portable terminal/server connection is made.

25. Dedicated telematics server including a CPU (20) connected to a scanner (21), a memory (22), a hard disc (23) and a modem (24) characterized in that it includes
- suitable means for transmitting data to several portable terminals and in particular update data or messages stored in the mailboxes corresponding to the number of each portable to which connection is made; such that the server can ensure that all terminal users have correctly received all the corresponding updates;
- suitable means for receiving messages from each portable terminal;
- the means for automatic data updating electronic page by electronic page, as soon as the portable terminal/server connection is made.
